# FASCICULE DE BREVET EUROPEEN

(11) **EP 2 867 515 B1**
(45) Date de publication et mention de la délivrance du brevet: **25.05.2016**
(21) Numéro de dépôt: 13733359.7
(22) Date de dépôt: 06.06.2013
(51) Int. Cl.: F02M 26/00, F02B 37/04, F02B 39/10

(54) **ENSEMBLE COMPRENANT UN MOTEUR THERMIQUE ET UN COMPRESSEUR ELECTRIQUE**
ANORDNUNG MIT EINER WÄRMEKRAFTMASCHINE UND EINEM ELEKTRISCHEN VERDICHTER
ASSEMBLY COMPRISING A HEAT ENGINE AND AN ELECTRIC COMPRESSOR

(30) Priorité: 11.06.2012 FR 1255415
(43) Date de publication de la demande: 06.05.2015
(73) Titulaire: Valeo Systèmes De Contrôle Moteur, 95800 Cergy St Christophe (FR)
(72) Inventeur: LUTZ, Philippe, F-78100 Le Vesinet (FR); POTTEAU, Sébastien, F-78510 Triel Sur Seine (FR); RAMSEYER, Aurélien, F-92100 Boulogne-Billancourt (FR)
(74) Mandataire: Garcia, Christine
(86) Numéro de dépôt international: PCT/FR2013/051294
(87) Numéro de publication internationale: WO 2013/186464

(56) Documents cités:
- EP-A1- 1 870 590
- EP-A2- 1 041 289
- EP-A2- 1 493 907
- WO-A1-99/15773
- WO-A1-2010/149566
- US-A1- 2005 081 835
- US-A1- 2010 146 968
- US-A1- 2011 094 486
- US-B1- 6 435 166

## Description

L'invention a pour objet un ensemble comprenant un moteur thermique et un compresseur électrique, et la commande de cet ensemble, notamment lors d'une phase transitoire. Cet ensemble peut être embarqué sur un véhicule.

Au sens de l'invention, une phase transitoire est une phase pendant laquelle la consigne en couple moteur augmente, par opposition à une phase établie lors de laquelle la consigne est constante.

Il est connu d'utiliser dans un véhicule un ensemble comprenant un circuit d'admission s'étendant entre une entrée d'air et une sortie reliée à l'entrée d'un moteur thermique, un moteur thermique, un circuit d'échappement s'étendant entre une entrée reliée à la sortie du moteur thermique et une sortie de gaz d'échappement, et une boucle de retour permettant à tout ou partie des gaz d'échappement dans le circuit d'échappement d'être réinjectés en amont du moteur thermique.

La boucle de retour est couramment disposée de manière à ce que son entrée dans le circuit d'échappement soit en aval d'une turbine et à ce que sa sortie dans le circuit d'admission soit en amont d'un compresseur mécanique placé dans le circuit d'admission. Du fait de cette disposition, la boucle de retour est désignée par boucle de retour BP (pour « basse pression »).

Dans toute la demande, les termes « en amont » et « en aval » sont définis par rapport au sens de circulation des gaz dans l'ensemble.

Un ensemble avec une telle boucle de retour BP présente de nombreux avantages puisqu'il permet d'assurer dans le moteur un taux de gaz recirculant par la boucle de retour ( gaz EGR en anglais) satisfaisant sur toute la plage de fonctionnement du moteur, et notamment à bas régime et forte charge.

Néanmoins, une telle boucle de retour BP présente des inconvénients en termes de longueur de chemin à parcourir pour les gaz recirculant dans cette boucle de retour et de dosage entre les gaz issus de l'entrée du circuit d'admission, encore appelés « air frais » par la suite, et les gaz ayant recirculé dans la boucle de retour. Ces inconvénients sont peu adaptés à un fonctionnement en phase transitoire à forte charge et à une phase suivant l'ouverture d'une vanne disposée dans la boucle de retour afin de provoquer la recirculation des gaz dans ladite boucle.

L'emploi d'une boucle de retour dont l'entrée dans le circuit d'échappement est en amont de la turbine et dont la sortie dans le circuit d'admission est en aval du compresseur mécanique, encore appelée boucle de retour HP (pour « haute pression »), permet de réduire la longueur de chemin à parcourir pour les gaz recirculant par cette boucle mais présente d'autres inconvénients.

Le document EP 1493 907 A2 divulgue un ensemble comprenant un compresseur électrique qui est installé dans un système de conduits et vannes de sorte qu'il est disposé dans la boucle de la recirculation des gaz d'échappement ou dans le circuit d'admission. La boucle de retour a une première sortie débouchant dans le circuit d'admission et une deuxième sortie débouchant dans le circuit d'admission en aval du compresseur électrique et en amont du collecteur d'admission. Le circuit d'admission comprend un compresseur mécanique et le circuit d'échappement comprend une turbine. La boucle de retour a une entrée en aval de la turbine.

Il existe un besoin pour bénéficier d'un ensemble permettant une recirculation satisfaisante de gaz d'échappement dans le moteur thermique, y compris lors de phases transitoires, telles que des phases d'accélération en charge ou des phases lors desquelles on provoque la recirculation de gaz d'échappement dans la boucle de retour de l'ensemble.

L'invention a pour but de répondre à ce besoin et elle y parvient à l'aide d'un ensemble selon la revendication 1.

Le compresseur électrique permet de comprimer tout ou partie des gaz recirculant dans la boucle de retour. Lorsque le compresseur électrique fonctionne, il peut par ailleurs accélérer le parcours des gaz d'échappement dans la boucle de retour en aspirant ces derniers. Le compresseur électrique peut ainsi permettre d'améliorer le taux de gaz recyclés (ou EGR) dans le moteur thermique dans la phase transitoire en réduisant le temps de transfert de ces gaz depuis la sortie du moteur jusqu'à leur réinjection dans ce dernier.

Grâce au taux d'EGR obtenu dès la phase transitoire, on peut protéger le moteur vis-à-vis du phénomène de cliquetis tout en assurant les performances souhaitées de façon dynamique. L'ensemble obtenu est par ailleurs relativement compact.

Le compresseur électrique est par exemple entraîné par un moteur électrique ayant une puissance nominale comprise entre 2 et 5 kW, voire jusqu'au 50 kW.

Le moteur électrique entraînant le compresseur électrique peut être un moteur à reluctance variable.

Le moteur thermique peut être un moteur thermique à combustion interne. Il s'agit par exemple d'un moteur à essence ou d'un moteur diesel. En variante, il peut s'agir d'un moteur polycarburant. Le moteur peut fonctionner avec des carburants alternatifs (ethanol, GPL, GNV).

Le circuit d'admission comprend un compresseur mécanique et le circuit d'échappement comprend une turbine, la boucle de retour ayant une entrée dans le circuit d'échappement en aval de la turbine et une sortie dans le circuit d'admission en amont du compresseur mécanique. La boucle de retour est alors une boucle de retour BP, comme expliqué ci-dessus.

En dehors de phases transitoires, le compresseur mécanique peut être utilisé pour comprimer les gaz recirculant dans la boucle de retour et/ou les gaz issus de l'entrée du circuit d'admission et favoriser la circulation des gaz EGR grâce à l'effet d'aspiration créé par son fonctionnement.

Le compresseur mécanique peut être solidaire de la turbine et entraîné par cette dernière, le compresseur mécanique et la turbine formant alors un turbocompresseur. En variante, le compresseur mécanique peut être entraîné par le moteur thermique, notamment via une courroie.

La boucle de retour peut comprendre un échangeur thermique à air ou à eau, permettant de refroidir les gaz d'échappement avant de les mélanger à l'air frais et avant de les réinjecter dans le moteur thermique.

Selon un mode de réalisation non revendiqué, le compresseur électrique est disposé hors de la boucle de retour, ayant une entrée reliée à la boucle de retour par une conduite d'entrée prenant naissance dans la boucle de retour. Selon ce mode de réalisation non revendiqué, le compresseur peut avoir sa sortie reliée à l'entrée du moteur par une conduite de sortie.

Selon ce mode de réalisation non revendiqué, le compresseur électrique peut n'être disposé ni dans le circuit d'admission, ni dans la boucle de retour, de sorte que la conduite d'entrée et la conduite de sortie forment un chemin additionnel permettant aux gaz dans la boucle de retour en amont de la conduite d'entrée d'atteindre le moteur thermique.

La conduite de sortie débouche par exemple directement dans le collecteur d'admission des gaz dans la chambre de combustion du moteur thermique. De cette façon, les gaz EGR étant réinjectés dans le moteur thermique sans emprunter le circuit d'admission, ces gaz ne perturbent pas l'air frais circulant dans le circuit d'admission. En conséquence, le débit de l'air frais dans le compresseur mécanique peut être optimal.

Le chemin additionnel formé par la conduite d'entrée, le compresseur électrique et la conduite de sortie peut se comporter comme une boucle de retour HP, de sorte que l'ensemble selon ce premier mode de réalisation dispose d'une boucle de retour BP et d'une pseudo boucle de retour HP.

La conduite d'entrée reliant la boucle de retour à l'entrée du compresseur électrique peut prendre naissance en aval de l'échangeur thermique.

La conduite de sortie peut comporter une portion circulant dans l'échangeur thermique.

Selon ce mode de réalisation non revendiqué, la recirculation des gaz via le compresseur électrique peut ainsi s'accompagner de deux refroidissements successifs de ces gaz, permettant que ces derniers aient une température appropriée lorsqu'ils sont réinjectés dans le moteur.

L'ensemble peut, selon ce mode de réalisation non revendiqué, comporter un système de vannes configuré pour diriger des gaz recirculant dans la boucle de retour depuis le circuit d'échappement vers la conduite d'entrée du compresseur électrique ou vers le circuit d'admission.

Selon une configuration du système de vannes, la totalité des gaz recirculant dans la boucle de retour peut être dirigée vers le compresseur électrique.

Selon une autre configuration du système de vannes, la totalité des gaz recirculant dans la boucle de retour peut être dirigée vers le circuit d'admission, c'est-à-dire que le compresseur électrique n'est pas alimenté en gaz EGR.

Une configuration dans laquelle une portion des gaz recirculant dans la boucle de retour est dirigée vers le circuit d'admission tandis que l'autre portion desdits gaz est dirigée vers le compresseur électrique est possible. Le rapport entre la portion des gaz dirigés vers le circuit d'admission et la portion des gaz dirigés vers le compresseur électrique peut varier au cours du temps, par exemple lorsque l'on passe de la phase transitoire à une phase établie, et inversement.

Le système de vannes comprend par exemple une vanne disposée dans la conduite d'entrée menant au compresseur électrique et une autre vanne disposée dans la boucle de retour en aval de la conduite d'entrée.

En variante, une vanne trois voies peut être disposée dans le boucle de retour à l'endroit où la conduite d'entrée prend naissance. Une voie peut être formée par la portion de la boucle de retour en amont de la conduite d'entrée, une autre voie peut être formée par la portion de la boucle de retour en aval de la conduite d'entrée, tandis que la dernière voie de la vanne trois voies peut être formée par la conduite d'entrée.

Selon l'invention, le compresseur électrique est disposé dans le circuit d'admission, la boucle de retour ayant une première sortie débouchant dans le circuit d'admission en amont du compresseur électrique et une deuxième sortie débouchant dans le circuit d'admission en aval du compresseur électrique. La deuxième sortie débouche dans le circuit d'admission en amont du collecteur d'admission des gaz dans la chambre de combustion du moteur thermique.

Les première et deuxième sorties de la boucle de retour peuvent être les seules sorties de cette boucle de retour.

Selon ce mode de réalisation, le compresseur électrique peut recevoir de l'air frais issu de l'entrée du circuit d'admission en complément des gaz recirculant à travers la boucle de retour, ou indépendamment de cas gaz EGR. Selon ce mode, le compresseur électrique présente ainsi deux entrées : une entrée en air frais et une entrée en gaz EGR.

La première et la deuxième sortie de la boucle de retour débouchent dans le circuit d'admission en amont du compresseur mécanique.

Le compresseur électrique et le compresseur mécanique peuvent tous deux être disposés dans le circuit d'admission selon ce mode de réalisation, le compresseur électrique étant placé en amont du compresseur mécanique.

Le circuit d'admission peut comprendre une branche de dérivation prenant naissance en amont du compresseur électrique et débouchant en aval du compresseur électrique. Cette branche de dérivation, ou « bypass » selon la terminologie anglaise, peut permettre à l'air frais entrant dans le circuit d'admission de contourner le compresseur électrique.

Selon ce mode de réalisation, l'ensemble peut comprendre un système de vannes configuré pour diriger des gaz recirculant dans la boucle de retour vers la première ou la deuxième sortie de ladite boucle.

Toujours selon ce mode de réalisation, le système de vannes peut être également configuré pour diriger des gaz issus de l'entrée du circuit d'admission dans la branche de dérivation ou vers le compresseur électrique.

Selon une configuration du système de vannes, la totalité des gaz recirculant dans la boucle de retour est dirigée vers la première sortie, de manière à alimenter le compresseur électrique.

Selon une autre configuration du système de vannes, la totalité des gaz recirculant dans la boucle de retour est dirigée vers la deuxième sortie, de sorte que ces gaz ne passent pas à travers le compresseur électrique.

Une configuration dans laquelle une portion des gaz recirculant dans la boucle de retour est dirigée vers la première sortie tandis que l'autre portion desdits gaz est dirigée vers la deuxième sortie est possible. Le rapport entre la portion de gaz dirigés vers la première sortie et la portion de ces gaz dirigés vers la deuxième sortie peut varier au cours du temps, par exemple lorsque l'on passe de la phase transitoire à une phase établie et inversement.

Dans chacune des configurations ci-dessus, le système de vannes peut permettre à tout ou partie des gaz issus de l'entrée du circuit d'admission de circuler dans le compresseur électrique ou de contourner ce dernier à l'aide de la branche de dérivation.

Lorsque le compresseur électrique reçoit à la fois les gaz recirculant dans la boucle de retour et les gaz issus de l'entrée du circuit d'admission, on peut obtenir une mise en circulation rapide dans le circuit d'admission d'un mélange homogène d'air frais et de gaz EGR.

Le système de vannes peut comprendre une vanne dans la portion de la boucle de retour adjacente à la première sortie, une vanne dans la portion de la boucle de retour adjacente à la deuxième sortie, une vanne dans la branche de dérivation et une vanne dans le circuit d'admission, en aval de l'entrée de la branche de dérivation et directement en entrée du compresseur électrique.

En variante, une vanne trois voies peut être prévue dans la boucle de retour, une voie correspondant à la première sortie, une autre voie correspondant à la deuxième sortie, tandis que l'autre voie correspond à la portion de la boucle de retour en amont de l'embranchement entre la première et la deuxième sortie.

Une vanne trois voies peut également exister au niveau de l'embranchement entre la branche de dérivation et la portion du circuit d'admission débouchant en entrée du compresseur électrique. En variante, la portion du circuit d'admission débouchant en entrée du compresseur électrique peut être dépourvue de vanne.

L'invention a encore pour objet, selon un autre de ses aspects, un procédé de commande d'un ensemble tel que défini ci-dessus, procédé dans lequel lors d'une phase transitoire, on active le compresseur électrique et on comprime à l'aide de ce dernier tout ou partie des gaz recirculant dans la boucle de retour.

Le compresseur électrique peut également, ou en variante, recevoir des gaz issus de l'entrée du circuit d'admission et le compresseur électrique peut comprimer lesdits gaz.

La phase transitoire peut correspondre à une accélération en charge du véhicule auquel est intégré l'ensemble ou au début d'une recirculation des gaz d'échappement dans la boucle de retour, par exemple.

La phase transitoire peut être suivie d'une phase établie selon laquelle on commande l'ensemble de manière à ce que le compresseur électrique ne soit pas alimenté en gaz recirculant dans la boucle de retour et/ou en gaz issus de l'entrée du circuit d'admission d'air.

L'ensemble peut comprendre un système de vannes, notamment tel que mentionné ci-dessus, et lors de la phase transitoire le système de vannes peut présenter une configuration dans laquelle le compresseur électrique reçoit :
- selon le mode de réalisation, la totalité des gaz recirculant dans la boucle de retour et la totalité de l'air frais issu de l'entrée du circuit d'admission.

Lorsque l'on évolue vers la phase établie, la configuration du système de vannes peut être modifiée, de sorte que :
- selon le mode de réalisation, une portion toujours plus importante de gaz recirculant dans la boucle de retour circule dans la deuxième sortie pour déboucher en aval du compresseur électrique et en amont du compresseur mécanique et une portion toujours plus importante d'air frais circule dans la branche de dérivation.
Lors de la phase établie, la configuration du système de vannes peut être telle que :
- selon le mode de réalisation, tous les gaz recirculant dans la boucle de retour rejoignent le circuit d'admission par la deuxième entrée et tous les gaz issus de l'entrée du circuit d'admission circulent dans la branche de dérivation.

Selon le procédé, l'ensemble équivaut en phase établie à un ensemble selon l'art antérieur, dépourvu de compresseur électrique.

En phase établie, le compresseur électrique peut être désactivé.

Selon le procédé, le compresseur électrique peut être utilisé pendant la phase d'amorçage du turbocompresseur puis désactivé une fois que le turbocompresseur fonctionne convenablement.

Dans tous les modes de réalisation ci-dessus, un catalyseur peut être prévu dans le circuit d'échappement et l'entrée de la boucle de retour peut être disposée en aval de ce catalyseur.

L'invention pourra être mieux comprise à la lecture de la description qui va suivre de modes de réalisation de celle-ci non limitatifs et à l'examen du dessin annexé sur lequel :
- la figure 1 représente de façon schématique un ensemble non revendiqué, et
- la figure 2 représente de façon schématique un ensemble selon le mode de réalisation.

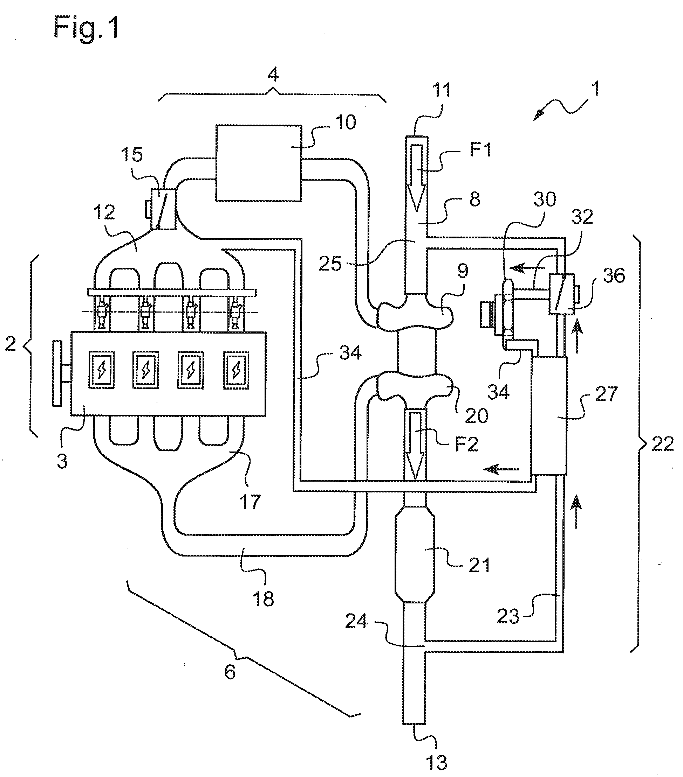

On a représenté à la figure 1 un ensemble 1 non revendiqué. Cet ensemble 1 comprend un moteur thermique 2 à combustion interne de véhicule automobile. Ce moteur 2 comporte une chambre de combustion 3 comportant une pluralité de cylindres, au nombre de quatre dans l'exemple décrit, et elle est destinée à recevoir un mélange de comburant et de carburant. Dans l'exemple décrit le carburant est de l'essence mais l'invention n'est pas limitée à un tel exemple de carburant, pouvant aussi s'appliquer à l'emploi de diesel comme carburant, par exemple. Le comburant est par exemple de l'air pur ou un mélange air/EGR.

La combustion dans les cylindres génère le travail du moteur 2. Le fonctionnement du moteur 2 est classique : les gaz sont admis dans la chambre de combustion 3, y sont comprimés, brûlés puis expulsés sous forme de gaz d'échappement.

Ce moteur 3 a une entrée reliée à un circuit d'admission 4 dans le moteur 2 et une sortie reliée à un circuit d'échappement de gaz 6.

L'entrée 11 du circuit d'admission définit l'entrée par laquelle l'air frais pénètre dans l'ensemble 1 tandis que la sortie 13 du circuit d'échappement 6 définit la sortie par laquelle les gaz d'échappement sont évacués de l'ensemble 1.

Le circuit d'admission 4 dans le moteur 2 comporte dans l'exemple considéré une canalisation d'admission 8 pour les gaz d'alimentation (dont le flux est représenté par la flèche F1), un compresseur mécanique 9 des gaz d'alimentation, qui est en l'espèce un turbocompresseur, et un échangeur de chaleur 10, permettant le refroidissement des gaz issus du compresseur mécanique 9. Cet échangeur de chaleur 10 est communément désigné par l'homme du métier par son acronyme "RAS", qui signifie "refroidisseur d'air de suralimentation"; sa fonction est en effet de refroidir les gaz d'admission et en particulier l'air, dont on dit qu'il est suralimenté puisqu'il est comprimé. En sortie du RAS 5, les gaz débouchent dans l'entrée du moteur 2 qui est formée par un collecteur d'admission 12 des gaz dans la chambre de combustion 3 du moteur 2. Le collecteur 12 forme ainsi une boîte d'entrée des gaz dans la culasse du moteur 2.

En amont du collecteur d'admission 12 des gaz dans le moteur 2, le circuit d'admission 4 peut comporter une vanne 15 comportant un obturateur de type papillon dont la fonction est de régler le débit de gaz pour la régulation du régime moteur ; cette vanne 15 est commandée par une unité de commande moteur (typiquement désignée par l'acronyme ECU qui signifie Engine Control Unit en anglais), bien connue de l'homme du métier.

La sortie du moteur 2 est formée par un collecteur 17 des gaz d'échappement. Ce dernier est relié à une voie ou canalisation 18 d'échappement des gaz faisant partie du circuit d'échappement de gaz 6. Le circuit d'échappement 6 comporte par ailleurs une turbine 20, solidaire en rotation du compresseur mécanique 9 des gaz d'admission et formant avec lui un turbocompresseur. La turbine 20 est entraînée par les gaz d'échappement de la voie d'échappement 18, dont le flux est schématisé par la flèche F2.

L'ensemble 1 comprend encore une boucle de retour 22 permettant à tout ou partie des gaz d'échappement circulant dans le circuit d'échappement 6 d'être réinjectés dans le moteur 2. Cette boucle de retour comporte une canalisation 23 de guidage des gaz d'échappement réinjectés dans le moteur 2. La boucle de retour 22 présente une entrée 24 dans le circuit d'échappement 6 et par laquelle des gaz d'échappement du circuit d'échappement 6 sont prélevés avant d'être évacués au niveau de la sortie 13. L'entrée 24 de la boucle de retour 22 peut être disposée à proximité de cette sortie 13 et en aval d'un catalyseur 21 présent dans le circuit d'échappement 6.

La boucle de retour 22 comprend dans l'exemple de la figure 1 une sortie 25 débouchant dans le circuit d'admission 4 et par laquelle des gaz d'échappement sont réinjectés en amont du moteur 2. Cette sortie 25 est ici disposée en amont du compresseur mécanique 9. La boucle de retour 22 est dans cet exemple une boucle de retour BP.

La boucle de retour 22 comprend en outre dans l'exemple de la figure 1 un échangeur thermique 27 à eau ou à air permettant de refroidir les gaz d'échappement recirculant dans la boucle 22.

Selon le mode de réalisation de la figure 1, l'ensemble comprend encore un compresseur électrique 30. Ce compresseur est entraîné par un moteur électrique non représenté dont la commande est par exemple effectuée par l'unité de commande moteur.

Selon le premier mode de réalisation, le compresseur électrique 30 est disposé hors de la boucle de retour 22 et relié à cette dernière par une conduite d'entrée 32. La conduite d'entrée 32 prend naissance dans la boucle de retour 22, en aval de l'échangeur thermique 27 dans l'exemple de la figure 1.

Le compresseur électrique 30 est par ailleurs relié au collecteur d'admission 12 par une conduite de sortie 34 dont une portion est reçue dans l'échangeur thermique 27.

Un chemin additionnel de recirculation existe selon ce premier mode de réalisation, permettant aux gaz en sortie du moteur 2 d'emprunter une partie de la boucle 22, la conduite d'entrée 32, le compresseur électrique 30 et la conduite de sortie 34 pour être réinjectés dans le moteur 2. Le long de ce chemin additionnel, les gaz traversent deux fois de suite l'échangeur thermique 27.

L'ensemble 1 peut, comme représenté sur la figure 1, comprendre un système de vannes permettant sélectivement de diriger tout ou partie des gaz recirculant dans la boucle 22 en amont de la conduite 32 d'entrée dans ladite conduite d'entrée 32 ou dans le circuit d'admission 4. Le système de vannes comprend dans cet exemple une vanne trois voies 36 dont une voie est formée par la portion de la boucle de retour 22 en amont de la conduite d'entrée 32, une autre voie est formée par la portion de la boucle de retour 22 en aval de la conduite d'entrée 32 et la dernière voie est formée par la conduite d'entrée 32.

Le fonctionnement de l'ensemble 1 de la figure 1 va maintenant être décrit. Lors d'une phase transitoire, le compresseur électrique 30 est activé et la vanne trois voies 36 est commandée de manière à ce que les gaz recirculant dans la boucle 22 soient dirigés dans la conduite d'entrée 32 et comprimés par le compresseur électrique 30. Ces gaz comprimés sont alors réinjectés par la conduite de sortie 34 directement dans le collecteur d'admission 12 où ils sont mélangés avec l'air frais. On s'assure ainsi d'un taux optimal d'EGR dans le moteur 2. Cette configuration de l'ensemble 1 peut être maintenue pendant quelques secondes.

La vanne trois voies 36 peut ensuite être commandée de manière à faire diminuer progressivement la quantité de gaz d'échappement circulant dans la conduite d'entrée 22 et à augmenter en conséquence la quantité de ces gaz réinjectés dans le circuit d'admission 2.

Finalement, la vanne trois voies 36 peut prendre la configuration dans laquelle la boucle de retour 22 est totalement empruntée par les gaz d'échappement, le compresseur électrique 30 étant alors désactivé. On est par exemple alors dans une phase établie.

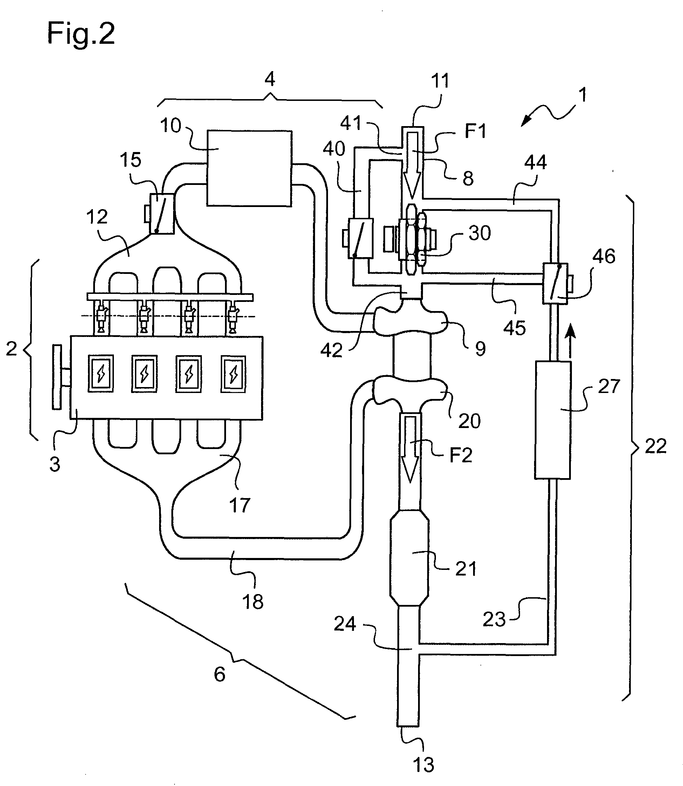

On va maintenant décrire en référence à la figure 2 le mode de réalisation de l'invention différant de celui décrite en référence à la figure 1 par la position du compresseur électrique 30. Dans cet exemple, le compresseur électrique 30 est disposé dans le circuit d'admission 4, en amont du compresseur mécanique 9.

Toujours dans cet exemple, le circuit d'admission 4 comprend une branche de dérivation 40 dont l'entrée 41 est située en amont du compresseur électrique 30 et dont la sortie 42 est située en aval du compresseur électrique 30 et en amont du compresseur mécanique 9. La branche de dérivation 40 permet ainsi aux gaz issus de l'entrée du circuit d'admission de contourner le compresseur électrique 30.

Toujours sur la figure 2, la boucle de retour 22 comprend deux sorties distinctes 44 et 45.

La première sortie 44 débouche dans le circuit d'admission 4 en amont du compresseur électrique 30 et en aval de l'entrée 41 de la conduite de dérivation 40, tandis que la deuxième sortie 45 débouche dans le circuit d'admission 4 en aval du compresseur électrique 30.

Comme représenté sur la figure 2, un système de vannes peut être prévu. Le système de vannes comprend dans cet exemple une vanne trois voies 46 disposé dans la boucle de retour 22 à l'embranchement entre la première sortie 44 et la deuxième sortie 45. Une voie est formée par la boucle de retour 22 en amont de l'embranchement tandis que les deux autres voies sont formées par chaque sortie 44 et 45.

Le système de vanne comprend en outre une vanne 48 disposée dans la conduite de dérivation 40.

Dans cet exemple, aucun chemin additionnel reliant la boucle de retour 22 à l'entrée du moteur 2 n'existe.

Le système de vannes peut être commandé de manière à ce que le compresseur électrique 30 reçoive :
- à la fois des gaz recirculant dans la boucle de retour 22 et des gaz issus de l'entrée 11 du circuit d'admission 4,
- uniquement des gaz recirculant dans la boucle de retour 22,
- uniquement des gaz issus de l'entrée 11 du circuit d'admission 4.

On va maintenant décrire un exemple de fonctionnement de l'ensemble 1 de la figure 2 lors d'une phase transitoire à forte charge.

La vanne trois voies 46 et la vanne 48 peuvent alors être commandées de manière à ce que tous les gaz recirculant dans la boucle 22 et tout l'air frais soient dirigés vers le compresseur électrique 30 et comprimés par ce dernier. Ce faisant, une mise en circulation rapide dans le circuit d'admission 4 d'un mélange air frais/gaz EGR homogène est favorisée.

Lorsque cette phase transitoire se termine, la vanne 48 peut être fermée progressivement et la configuration de la vanne trois voies 46 peut être modifiée progressivement jusqu'à ce que l'air frais circule uniquement dans la conduite de dérivation 40 et que les gaz EGR circulent uniquement dans la deuxième sortie 45. Lors de la phase établie, le compresseur électrique 30 est alors court-circuité. L'ensemble 1 se comporte alors comme un ensemble dépourvu de compresseur électrique 30 et ayant une boucle de retour BP.

L'invention n'est pas limitée aux exemples qui viennent d'être décrits.

L'expression «comprenant un» doit être comprise comme étant synonyme de l'expression « comprenant au moins un », sauf lorsque le contraire est spécifie.

## Revendications

1. Ensemble (1) comprenant :
- un circuit d'admission (4) s'étendant entre une entrée d'air (11) et une sortie reliée à l'entrée d'un moteur thermique (2),
- un circuit d'échappement (6) s'étendant entre une entrée reliée à la sortie du moteur thermique (2) et une sortie de gaz d'échappement (13),
- ledit moteur thermique (2),
- une boucle de retour (22) permettant à tout ou partie des gaz d'échappement dans le circuit d'échappement (6) d'être réinjectés en amont du moteur thermique (2), et
- un compresseur électrique (30),
le compresseur électrique (30) étant disposé dans l'ensemble (1) de manière à pouvoir recevoir des gaz recirculant dans la boucle de retour (22), le compresseur électrique (30) étant disposé dans le circuit d'admission (4), la boucle de retour (22) ayant :
- une première sortie (44) débouchant dans le circuit d'admission (4) en amont du compresseur électrique (30), et
- une deuxième sortie (45) débouchant dans le circuit d'admission (4) en aval du compresseur électrique (30) et en amont du collecteur d'admission des gaz dans la chambre de combustion du moteur thermique (2),
le circuit d'admission (4) comprenant un compresseur mécanique (9) et le circuit d'échappement (6) comprenant une turbine (20), la boucle de retour (22) ayant une entrée (24) en aval de la turbine et ses sorties (44, 45) en amont du compresseur mécanique (9).

2. Ensemble selon la revendication précédente, les première (44) et deuxième (45) sorties de la boucle de retour (22) étant les seules sorties de cette boucle de retour (22).

3. Ensemble selon l'une quelconque des revendications précédentes, le circuit d'admission (4) comprenant une branche de dérivation (40) prenant naissance en amont du compresseur électrique (30) et débouchant en aval du compresseur électrique (30).

4. Ensemble selon l'une quelconque des revendications précédentes, comprenant un système de vannes (46, 48) configuré pour diriger des gaz recirculant dans la boucle de retour (22) vers la première (44) ou la deuxième (45) sortie de ladite boucle (22).

5. Ensemble selon la revendication 4, le système de vannes (46, 48) étant également configuré pour diriger des gaz issus de l'entrée (11) du circuit d'admission (4) dans la branche de dérivation (40) ou dans le compresseur électrique (30).

6. Procédé de commande d'un ensemble (1) selon l'une quelconque des revendications précédentes, dans lequel lors d'une phase transitoire, on active le compresseur électrique (30) et on comprime à l'aide de ce dernier tout ou partie des gaz recirculant dans la boucle de retour (22).

7. Procédé selon la revendication 6, dans lequel le compresseur électrique (30) reçoit également des gaz issus de l'entrée (11) du circuit d'admission (4), et dans lequel le compresseur électrique (30) comprime également lesdits gaz.

8. Procédé selon la revendication 6 ou 7, dans lequel la phase transitoire est suivie d'une phase établie selon laquelle on commande l'ensemble (1) de manière à ce que le compresseur électrique (30) ne soit pas alimenté en gaz recirculant dans la boucle de retour (22) ou en gaz issus de l'entrée (11) du circuit d'admission d'air (4).

9. Procédé selon la revendication 8, dans lequel on désactive le compresseur électrique (30) lors de la phase établie.

10. Procédé selon l'une quelconque des revendications 6 à 9, dans lequel le compresseur électrique (30) est entraîné par un moteur à reluctance variable.

## Patentansprüche

1. Einheit (1), die enthält:
- einen Ansaugtrakt (4), der sich zwischen einem Lufteingang (11) und einem mit dem Eingang eines Verbrennungsmotors (2) verbundenen Ausgang erstreckt,
- einen Abgasstrang (6), der sich zwischen einem mit dem Ausgang des Verbrennungsmotors (2) verbundenen Eingang und einem Abgasausgang (13) erstreckt,
- den Verbrennungsmotor (2),
- eine Rückkopplungsschleife (22), die es den ganzen oder einem Teil der Abgase im Abgasstrang (6) ermöglicht, stromaufwärts vor dem Verbrennungsmotor (2) wieder eingespeist zu werden, und
- einen elektrischen Verdichter (30),
wobei der elektrische Verdichter (30) so in der Einheit (1) angeordnet ist, dass er in der Rückkopplungsschleife (22) rückgeführte Gase empfangen kann, wobei der elektrische Verdichter (30) im Ansaugtrakt (4) angeordnet ist, wobei die Rückkopplungsschleife (22) hat:
- einen ersten Ausgang (44), der in den Ansaugtrakt (4) stromaufwärts vor dem elektrischen Verdichter (30) mündet, und
- einen zweiten Ausgang (45), der in den Ansaugtrakt (4) stromabwärts hinter dem elektrischen Verdichter (30) und stromaufwärts vor dem Ansaugkrümmer der Gase in den Brennraum des Verbrennungsmotors (2) mündet,
wobei der Ansaugtrakt (4) einen mechanischen Verdichter (9) enthält, und der Abgasstrang (6) eine Turbine (20) enthält, wobei die Rückkopplungsschleife (22) einen Eingang (24) stromabwärts hinter der Turbine und ihre Ausgänge (44, 45) stromaufwärts vor dem mechanischen Verdichter (9) hat.

2. Einheit nach dem vorhergehenden Anspruch, wobei der erste (44) und der zweite (45) Ausgang der Rückkopplungsschleife (22) die einzigen Ausgänge dieser Rückkopplungsschleife (22) sind.

3. Einheit nach einem der vorhergehenden Ansprüche, wobei der Ansaugtrakt (4) einen Ableitungszweig (40) enthält, der stromaufwärts vor dem elektrischen Verdichter (30) beginnt und stromabwärts hinter dem elektrischen Verdichter (30) mündet.

4. Einheit nach einem der vorhergehenden Ansprüche, die ein Ventilsystem (46, 48) enthält, das konfiguriert ist, in die Rückkopplungsschleife (22) rückgeführte Gase zum ersten (44) oder zweiten (45) Ausgang der Schleife (22) zu lenken.

5. Einheit nach Anspruch 4, wobei das Ventilsystem (46, 48) ebenfalls konfiguriert ist, vom Eingang (11) des Ansaugtrakts (4) stammende Gase in den Ableitungszweig (40) oder in den elektrischen Verdichter (30) zu lenken.

6. Steuerverfahren einer Einheit (1) nach einem der vorhergehenden Ansprüche, wobei in einer Übergangsphase der elektrische Verdichter (30) aktiviert und mit dessen Hilfe die ganzen oder ein Teil der in die Rückkopplungsschleife (22) rückgeführten Gase verdichtet werden.

7. Verfahren nach Anspruch 6, wobei der elektrische Verdichter (30) ebenfalls vom Eingang (11) des Ansaugtrakts (4) stammende Gase empfängt, und wobei der elektrische Verdichter (30) die Gase ebenfalls verdichtet.

8. Verfahren nach Anspruch 6 oder 7, wobei auf die Übergangsphase eine stationäre Phase folgt, gemäß der die Einheit (1) so gesteuert wird, dass der elektrische Verdichter (30) nicht mit in die Rückkopplungsschleife (22) rückgeführten Gasen oder mit vom Eingang (11) des Luftansaugtrakts (4) stammenden Gasen gespeist wird.

9. Verfahren nach Anspruch 8, wobei der elektrische Verdichter (30) in der stationären Phase deaktiviert wird.

10. Verfahren nach einem der Ansprüche 6 bis 9, wobei der elektrische Verdichter (30) von einem Motor mit variabler Reluktanz angetrieben wird.

## Claims

1. Assembly (1) comprising:
- an intake circuit (4) extending between an air inlet (11) and an outlet connected to the inlet of a heat engine (2),
- an exhaust circuit (6) extending between an inlet connected to the outlet of the heat engine (2) and an exhaust gas outlet (13),
- said heat engine (2),
- a return loop (22) allowing all or some of the exhaust gases in the exhaust circuit (6) to be reinjected upstream of the heat engine (2), and
- an electric compressor (30),
the electric compressor (30) being located in the assembly (1) in such a way as to be able to receive gases recirculating through the return loop (22), the electric compressor (30) being located in the intake circuit (4), the return loop (22) having:
- a first outlet (44) opening into the intake circuit (4) upstream of the electric compressor (30), and
- a second outlet (45) opening into the intake circuit (4) downstream of the electric compressor (30) and upstream of the manifold admitting gases into the combustion chamber of the heat engine (2),
the intake circuit (4) comprising a mechanical compressor (9) and the exhaust circuit (6) comprising a turbine (20), the return loop (22) having an inlet (24) downstream of the turbine and its outlets (44, 45) upstream of the mechanical compressor (9).

2. Assembly according to the preceding claim, the first (44) and second (45) outlets of the return loop (22) being the only outlets of this return loop (22).

3. Assembly according to either of the preceding claims, the intake circuit (4) comprising a bypass branch (40) starting upstream of the electric compressor (30) and opening downstream of the electric compressor (30).

4. Assembly according to any one of the preceding claims, comprising a system of valves (46, 48) which is configured to direct gases recirculating in the return loop (22) toward the first (44) or the second (45) outlet of said loop (22).

5. Assembly according to Claim 4, the system of valves (46, 48) also being configured to direct gases originating from the inlet (11) of the intake circuit (4) into the bypass branch (40) or into the electric compressor (30).

6. Method for controlling an assembly (1) according to any one of the preceding claims, in which during a transient phase the electric compressor (30) is activated and used to compress all or some of the gases recirculating in the return loop (22).

7. Method according to Claim 6, in which the electric compressor (30) also receives gases originating from the inlet (11) of the intake circuit (4), and in which the electric compressor (30) compresses said gases also.

8. Method according to Claim 6 or 7, in which the transient phase is followed by a steady-state phase in which the assembly (1) is controlled in such a way that the electric compressor (30) is not supplied with gases recirculating in the return loop (22) or with gases originating from the inlet (11) of the air intake circuit (4).

9. Method according to Claim 8, in which the electric compressor (30) is deactivated during the steady-state phase.

10. Method according to any one of Claims 6 to 9, in which the electric compressor (30) is driven by a variable-reluctance motor.
